# EUROPÄISCHE PATENTSCHRIFT

(11) **EP 0 489 112 B1**
(45) Veröffentlichungstag und Bekanntmachung des Hinweises auf die Patenterteilung: **22.06.1994**
(21) Anmeldenummer: 90913822.4
(22) Anmeldetag: 16.08.1990
(51) Int. Cl.: G11B 17/04, G11B 11/10

(54) **HALTEVORRICHTUNG FÜR EINE PLATTE IN EINEM MAGNETO-OPTISCHEN AUFZEICHNUNGS- UND/ODER WIEDERGABEGERÄT**
RECORD HOLDER FOR A MAGNETO-OPTICAL RECORDING AND/OR PLAYBACK DEVICE
PORTE-DISQUE POUR DISPOSITF D'ENREGISTREMENT ET/OU DE REPRODUCTION MAGNETO-OPTIQUE

(30) Priorität: 24.08.1989 DE 3927903
(43) Veröffentlichungstag der Anmeldung: 10.06.1992
(73) Patentinhaber: Deutsche Thomson-Brandt GmbH, 78003 Villingen-Schwenningen (DE)
(72) Erfinder: SUZUKI, Tsuneo, D-7733 Mönchweiler (DE)
(86) Internationale Anmeldenummer: EP9001339
(87) Internationale Veröffentlichungsnummer: WO9103047

(56) Entgegenhaltungen:
- EP-A- 0 222 916
- DE-A- 3 811 184
- GB-A- 2 192 750
- US-A- 4 740 937
- PATENT ABSTRACTS OF JAPAN, Band 10, Nr. 127 (P-455) (2184), 13. Mai 1986;& JP-A-60251541
- PATENT ABSTRACTS OF JAPAN, Band 9, Nr. 323 (P-414)(2046), 18. Dezember 1985;& JP-A-60147949

## Beschreibung

Die Erfindung betrifft eine Haltevorrichtung für eine Platte in einem magneto-optischen Aufzeichnungs- und/oder Wiedergabegerät, bei dem die Platte auf der einen Seite von einem ersten Rad gehalten wird, bei dem von der anderen Seite ein erster Arm mit einem zweiten Rad um eine Achse gegen das erste Rad schwenkbar ist, um die Platte zu zentrieren, und bei dem ein Elektromagnet zum Ummagnetisieren der Platte vorgesehen ist.

In einem magneto-optischen Aufzeichnungs- und/oder Wiedergabegerät wird eine Platte, der Aufzeichnungsträger, mittels eines Rades, das an einem schwenkbaren Arm befestigt ist, auf ein anderes fest mit einem Gehäuse verbundenen Rad gedrückt, damit die Platte auf dem Plattenantrieb zentriert wird. Eines der beiden Räder, meist das dem Arm gegenüberliegende am Gehäuse angeordnete Rad, wird von einem Motor angetrieben. Die eine Seite der Platte, z.B. die untere, wird von einer optischen Abtastvorrichtung abgetastet. Auf der gegenüberliegenden oberen Seite der Platte liegt möglichst dicht über der Plattenoberfläche ein Elektromagnet, der die magnetischen Domänen der Platte ummagnetisiert.

Aus der US-A-4 740 937 ist eine Haltevorrichtung für eine Platte in einem magneto-optischen Aufzeichnungs- und/oder Wiedergabegerät bekannt. Die Platte wird auf der einen Seite von einem ersten Rad gehalten. Von der anderen Seite ist ein erster Arm mit einem zweiten Rad um eine Achse gegen das erste Rad schwenkbar gelagert, um die Platte zu zentrieren. Zum Ummagnetisieren der Platte ist ein Elektromagnet vorgesehen, der auf einem zweiten Arm sitzt, der um eine Achse gegen die Platte schwenkbar ist.

Beim Ein- und Ausfahren der Platte muß der Elektromagnet genügend weit angehoben werden, damit er nicht an die Platte stößt und dabei ihre empfindliche Oberfläche mit Kratzern beschädigt.

Aufgabe der Erfindung ist es deshalb, für ein magneto-optisches Aufzeichnungs- und/oder Wiedergabegerät eine Vorrichtung vorzusehen, die verhindert, daß der Elektromagnet beim Laden und Entladen des Gerätes mit einer Platte ihre Oberfläche durch Kratzer beschädigt.

Die Erfindung löst diese Aufgabe dadurch, daß am ersten Arm ein Hebel an einer Achse drehbar befestigt ist, daß der zweite Arm mit dem Elektromagmenten auf dem einen Arm des Hebels aufliegt, daß für den anderen Arm des Hebels ein Anschlag vorgesehen ist, daß beim Wegschwenken des ersten Arms von der Platte der eine Arm des Hebels den zweiten Arm mit dem Elektromagneten von der Platte wegdrückt, daß der andere Arm des Hebels an den Anschlag stößt, so daß der Hebel um seine Achse gedreht wird, wodurch der eine Arm des Hebels den zweiten Arm noch weiter von der Platte wegdrückt.

Es zeigen
- Figur 1: eine Platte in Abspielposition in einem magneto-optischen Aufzeichnungs- und/oder Wiedergabegerät
- Figur 2: ein erstes Ausführungsbeispiel der Erfindung in Draufsicht
- Figur 3: eine Seitenansicht des ersten Ausführungsbeispiels in einer ersten Position
- Figur 4: eine Seitenansicht des ersten Ausführungsbeispiels in einer zweiten Position.

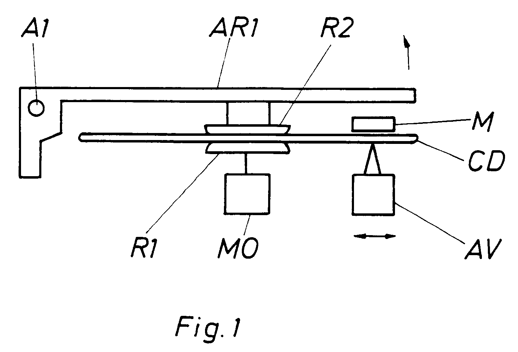

In der Figur 1 ist gezeigt, wie eine Platte CD mittels eines Rads R2, das auf einem Arm AR1 sitzt, der um eine Achse A1 schwenkbar ist, gegen ein Rad R1 gedrückt und auf diese Weise zentriert wird. Das Rad R1 wird von einem Motor MO angetrieben. Die untere Seite der Platte CD wird von einer optischen Abtastvorrichtung AV abgetastet. Dicht über der oberen Seite der Platte CD liegt ein Elektromagnet M, um die Magnetisierungsrichtung der magnetischen Domänen in der Platte CD umdrehen zu können. Während des Betriebs werden der Elektromagnet M und die optische Abtastvorrichtung AV in radialer Richtung bezüglich der Platte CD bewegt, wie durch den Doppelpfeil angedeutet ist.

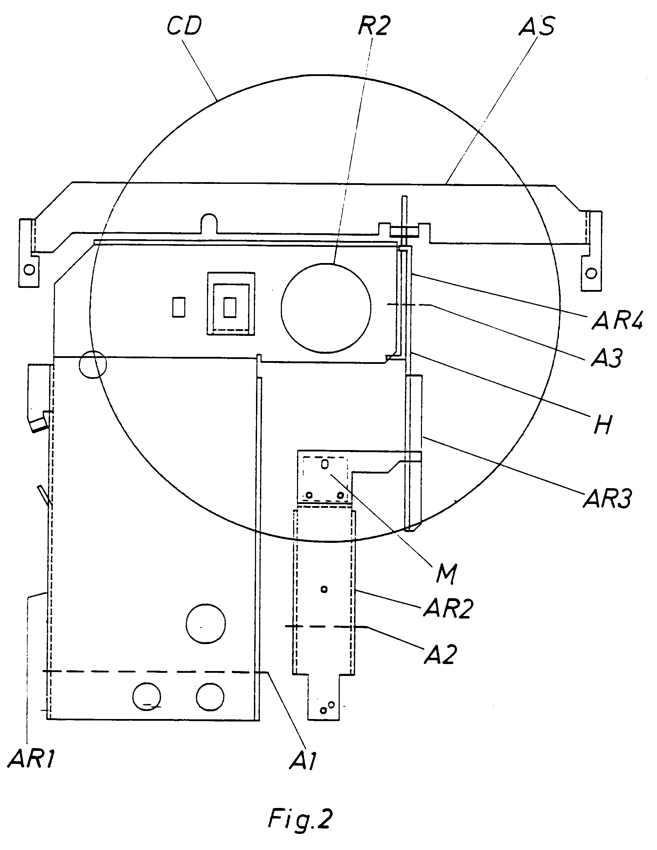

Figur 2 zeigt den Arm AR1 mit dem Rad R2, der um die Achse A1 schwenkbar ist. Der Magnet M, der gestrichelt gezeichnet ist, ist an einem Arm AR2 befestigt, der um eine Achse A2 schwenkbar ist. Am Arm AR1 ist ein Hebel H um eine Achse A3 drehbar gelagert. Auf dem einen Arm AR3 des Hebels H3 liegt der Arm AR2 auf, der den Elektromagneten M trägt. Für den anderen Arm AR4 des Hebels H ist ein Anschlag AS vorgesehen.

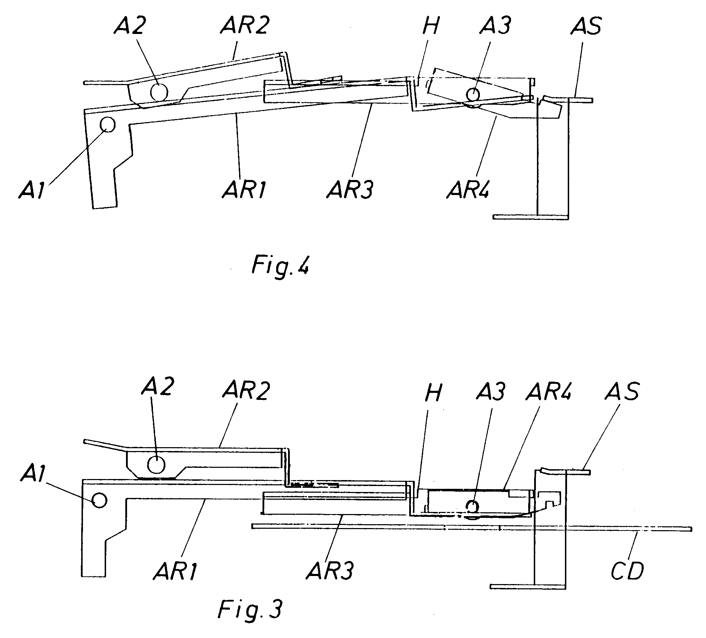

Figur 3 zeigt eine Seitenansicht des Ausführungsbeisplels, in der der Arm AR1 in der unteren Lage liegt. Die Platte CD befindet sich in der Abspielposition. Während des Abspielbetriebs und des Suchbetriebs gleitet der Arm AR2 auf dem einen Arm AR3 des Hebels H, der in Abspielposition parallel zur Plattenoberfläche verläuft. Der Arm AR2 kann z.B. mittels einer Feder auf den einen Arm AR3 des Hebels H gedrückt werden.

In Figur 4 ist die Stellung des Arms AR1 gezeigt, in der eine Platte in die Abspielposition oder aus der Abspielposition bewegt wird. Die bei den Arme AR3 und AR4 des Hebels H können gegeneinander drehbar ausgeführt sein. Eine nicht eingezeichnete Feder hält sie in der Abspielposition parallel, während sie in der Figur 4 um einen Winkel gegeneinander gedreht sind. Diese Maßnahme hat den Vorteil, daß der Arm AR1 weiter angehoben werden kann, ohne daß der Arm AR2 mit dem Magneten diese Bewgung mitmacht.

Zum Laden und zum Entladen des magneto-optischen Aufzeichnungsund/oder Wiedergabegerätes mit einer Platte CD wird der Arm AR1 in Pfeilrichtung noch oben geschwenkt. Der eine Arm AR3 des Hebels H drückt deshalb den Arm AR2 mit dem Elektromagneten M ebenfalls noch oben. Weil aber der andere Arm AR4 des Hebels H am Anschlag AS anstößt, dreht sich der Hebel H um seine Achse A3, so daß der eine Arm AR3 des Hebels H den Arm AR2 noch weiter nach oben, also weiter weg von der Platte CD drückt. Auf diese Weise wird beim Laden und Entladen des Gerätes mit einer Platte ein genügend großer Abstand zwischen dem Elektromagneten und der Platte erzielt. Die Platte CD ist daher vor Kratzern durch den Elektromagneten M geschützt.

Die Erfindung ist für magneto-optische Aufzeichnungs- und/oder Wiedergabegeräte geeignet. Es spielt keine Rolle, ob die Platte im Gerät z.B. waagerecht liegt oder senkrecht steht.

## Patentansprüche

1. Haltevorrichtung für eine Platte (CD) in einem magneto-optischen Aufzeichnungs- und/oder Wiedergabegerät, bei dem die Platte (CD) auf der einen Seite von einem ersten Rad (R1) gehalten wird, bei dem von der anderen Seite ein erster Arm mit einem zweiten Rad (R2) um eine Achse (A1) gegen das erste Rad (R1) schwenkbar ist, um die Platte (CD) zu zentrieren, und bei dem ein Elektromagnet (M) zum Ummagnetisieren der Platte vorgesehen ist, der auf einem zweiten Arm (AR2) sitzt, der um eine Achse (A2) gegen die Platte (CD) schwenkbar ist, **dadurch gekennzeichnet**, daß am ersten Arm (AR1) ein Hebel (H) an einer Achse (A3) drehbar befestigt ist, daß der zweite Arm (AR2) mit dem Elektromagneten (M) auf dem einen Arm (AR3) des Hebels (H) aufliegt, daß für den anderen Arm (AR4) des Hebels (H) ein Anschlag (AS) vorgesehen ist, daß beim Wegschwenken des ersten Arms (AR1) von der Platte (CD) der eine Arm (AR3) des Hebels (H) den zweiten Arm (AR2) mit dem Elektromagneten (M) von der Platte (CD) wegdrückt, daß der andere Arm (AR4) des Hebels (H) an den Anschlag (AS) stößt, so daß der Hebel (H) um seine Achse (A3) gedreht wird, wodurch der eine Arm (AR3) des Hebels (H) den zweiten Arm (AR2) noch weiter von der Platte (CD) wegdrückt.

2. Haltevorrichtung nach Anspruch 1, **dadurch gekennzeichnet**, daß der zweite Arm (AR2) mittels einer Feder gegen den einen Arm (AR3) des Hebels (H) gedrückt wird.

3. Haltevorrichtung nach Anspruch 1 oder 2, **dadurch gekennzeichnet**, daß im Spielbetrieb der Hebel (H) parallel zur Plattenoberfläche verläuft.

4. Haltevorrichtung nach Anspruch 1, 2 oder 3, **dadurch gekennzeichnet**, daß die beiden Arme (AR3, AR4) des Hebels (H) gegeneinander drehbar sind und daß eine Feder die beiden Arme (AR3, AR4) zueinander parallel hält.

## Claims

1. Holding device for a record (disk) (CD) in a magneto-optical recording and/or reproduction (playback) device in which the record (CD) is held on one side by a first wheel (R1), in which, from the other side, a first arm with a second wheel (R2) can be swivelled about an axis (A1) against the first wheel (R1) in order to center the record (CD), and in which an electromagnet (M), mounted on a second arm (AR2), is provided for reversing the magnetization of the record, and said arm can be swivelled about an axis (A2) against the record (CD), **characterized in that** a lever (H) rotates on an axis (A3) on the first arm (AR1), that the second arm (AR2) with the electromagnet (M) lies on the one arm (AR3) of the lever (H), that a stop (AS) is provided for the other arm (AR4) of the lever (H), that when swinging the first arm (AR1) away from the record (CD) the one arm (AR3) of the lever (H) forces the second arm (AR2) with the electromagnet (M) away from the record (CD), that the other arm (AR4) of the lever (H) strikes the stop (AS) so that the lever (H) is turned about its axis (A3), whereby the one arm (AR3) of the lever (H) forces the second arm (AR2) even further away from the record (CD).

2. Holding device according to claim 1, **characterized in** that the second arm (AR2) is pressed by a spring against the one arm (AR3) of the lever (H).

3. Holding device according to claims 1 or 2, **charterized in** that during play operation the lever (H) extends parallel to the surface of the record.

4. Holding device according to claims 1, 2 or 3, **characterized in** that the two arms (AR3, AR4) of the lever (H) are rotatable relative to each other and that a spring holds the two arms (AR3, AR4) parallel to each other.

## Revendications

1. Porte-disque pour un disque (CD) dans un appareil d'enregistrement et/ou de lecture magnéto-optique dans lequel le disque (CD) est maintenu sur l'un des côtés par une première roue (R1), dans lequel de l'autre côté un premier bras avec une seconde roue (R2) peut pivoter autour d'un axe (A1) contre la première roue (R1) pour centrer le disque (CD) et dans lequel un électroaimant (M) est prévu pour l'inversion magnétique du disque, électroaimant qui se trouve sur un second bras (AR2) qui est pivotant autour d'un axe (A2) contre le disque (CD), **caractérisé en ce** qu'un lever (H) est fixé en étant rotatif autour d'un axe (A3) sur le premier bras (AR1), que le second bras (AR2) avec l'électroaimant (M) repose sur l'un des bras (AR3) du levier (H), qu'il est prévu une butée (AS) pour l'autre bras (AR4) du levier (H), que, lorsque le premier bras (AR1) s'éloigne du disque (CD) par pivotement, l'un des bras (AR3) du levier (H) pousse le second bras (AR2) avec l'électroaimant (M) loin du disque (CD), que l'autre bras (AR4) du lever (H) bute contre la butée (AS) si bien que le levier (H) est tourné autour de son axe (A3), ce par quoi l'un des bras (AR3) du levier (H) pousse le second bras (AR2) encore plus loin du disque (CD).

2. Porte-disque selon la revendication 1, **caractérisé en ce** que le second bras (AR2) est poussé au moyen d'un ressort contre l'un des bras (AR3) du levier (H).

3. Porte-disque selon la revendication 1 ou 2, **caractérisé en ce** que le levier (H) est parallèle à la surface du disque en mode lecture.

4. Porte-disque selon la revendication 1, 2 ou 3, **caractérisé en ce** que les deux bras (AR3, AR4) du levier (H) sont rotatifs l'un par rapport à l'autre et qu'un ressort maintient les deux bras (AR3, AR4) parallèles l'un à l'autre.
